# FASCICULE DE BREVET EUROPEEN

(11) **EP 0 394 110 B1**
(45) Date de publication et mention de la délivrance du brevet: **06.07.1994**
(21) Numéro de dépôt: 90401014.7
(22) Date de dépôt: 12.04.1990
(51) Int. Cl.: H02M 1/08

(54) **Procédé de commande d'interrupteurs pour l'alimentation en ondes entières d'un circuit triphasé**
Schaltsteuerverfahren für eine Vollwellenleistungsversorgung einer dreiphasigen Schaltung
Switch control method for power supply by full waves in a three phase circuit

(30) Priorité: 21.04.1989 FR 8905315
(43) Date de publication de la demande: 24.10.1990
(73) Titulaire: Caen, Claude, F-92100 Boulogne-sur-Seine (FR)
(72) Inventeur: Caen, Claude, F-92100 Boulogne-sur-Seine (FR)
(74) Mandataire: CABINET BONNET-THIRION

(56) Documents cités:
- FR-A- 2 089 138
- FR-A- 2 122 022
- IEEE TRANSACTIONS ON INDUSTRY AND GENERAL APPLICATIONS. vol. IGA-4, no. 5, octobre 1968, NEW YORK US pages 520 - 526; R.B. Hood: "Proposed Integrated Circuit for Appliance or Process Control"
- Electronique Industrielle avril 1970, pages 227 - 231; R. Roublot: "Un circuit intégré pour la commande de thyristors et triacs"

## Description

La présente invention concerne un procédé de commande d'interrupteurs du type à thyristors, destiné à l'alimentation en ondes entières d'un circuit de puissance triphasé, plus particulièrement d'un circuit dans lequel la puissance est transmise à travers un transformateur, et remarquable en ce qu'il associe les plus hautes performances, à savoir des ondes entières dépourvues de front raide d'une part et des cycles de courte durée d'autre part, à un circuit de puissance économique à deux interrupteurs seulement, placés sur deux des phases d'alimentation, la troisième phase étant reliée directement à la charge. La commande des thyristors par trains d'ondes entières a trouvé, au cours des deux dernières décades, un champ d'application croissant dans la régulation de chauffage appliqué aux processus industriels, tels que la fabrication et le traitement du verre. Le réglage de la puissance est obtenu par modulation du taux de travail, c est-à-dire par variation de la durée des trains d'ondes par rapport aux temps de repos entre trains d'ondes.

Par rapport à la commande, plus classique, des thyristors par "réglage de phase", la commande par ondes entières présente deux avantages :
1) Suppression de fronts raides sur les ondes de tension et de courant, tant sur le réseau d'alimentation que celui d'utilisation.
2) Amélioration du facteur de puissance.

En effet, les fronts raides de tension et courant sont générateurs de parasites et susceptibles de perturber le fonctionnement des autres circuits électroniques, tant analogiques que numériques, alimentés par le même réseau. D'autre part, le maintien du facteur de puissance à une valeur proche de l'unité est impératif dès que la puissance concernée n'est pas négligeable devant la puissance totale absorbée. Or la commande par ondes entières, contrairement à la commande de phase, n'introduit pas de déphasage entre courant et tension et permet en outre d'égaliser la puissance globale absorbée par plusieurs voies de chauffe.

Toutefois, la présence d'un transformateur électromagnétique, en tant qu'élément intermédiaire dans la transmission de la puissance délivrée par les interrrupteurs à thyristors connectés au primaire et le circuit d'utilisation, connecté au secondaire, impose au procédé de commande des thyristors de respecter les limites de saturation magnétique du transformateur, compte tenu des régimes transitoires correspondant au début et à la fin des trains d'ondes. Cela se traduit, soit par une complexité accrue, soit par des performances réduites de ces équipements et, effectivement, les procédés de commande à ondes entières pour l'alimentation de circuits triphasés à travers transformateur existant actuellement se divisent en deux catégories :

1) Les procédés à hautes performances, du type de celui décrit dans le brevet français n° 71 01242 publié sous le n° 2 122 022.

Dans ces procédés, les performances potentielles de la commande à ondes entières sont pleinement mises en valeur. Notamment les ondes de tension et courant sont effectivement dépourvues de fronts raides et la durée des cycles de travail est minimale, de sorte que les fluctuations de l'énergie délivrée de part et d'autre de sa valeur moyenne sont minimales également dans le cas d'une seule voie de chauffe et, a fortiori, de plusieurs voies, ce qui permet une égalisation optimale de la puissance globale. Par contre, ils utilisent trois interrupteurs, un sur chaque phase, et sont de ce fait, moins économiques.

2) Les procédés qui n'utilisent que deux interrrupteurs pour les trois phases, tel que celui décrit dans le brevet français n° 71 11820 publié sous le numéro 2 089 138, sont économiques, mais présentent de par leur principe, des performances dégradées, du double fait qu'ils introduisent des fronts raides de tension et de courant en début de chaque train d'ondes et ne peuvent fonctionner qu'avec des cycles de travail longs, pour ménager des périodes de relaxation magnétique suffisantes au transformateur, entre deux trains d'ondes.

L'objet de la présente invention est de proposer un procédé qui réalise la synthèse des précédents, en intégrant les hautes performances du premier à un dispositif ne comportant que deux interrupteurs, comme dans le deuxième.

Dans ce but, l'invention propose un procédé de commande d'interrupteurs à courant alternatif, pour l'alimentation en ondes entières d'un circuit triphasé, à l'aide de deux interrupteurs placés chacun en série dans une phase d'alimentation, la troisième phase étant reliée directement au circuit d'utilisation, le début de chaque train d'ondes étant obtenu par fermeture, dans un ordre constant, d'un premier interrupteur puis du second interrupteur environ 90° après le premier, caractérisé en ce que les interrupteurs sont fermés, chacun, à un instant proche du passage à zéro de la tension à ses bornes et, pour le premier, en alternant, d'un train d'ondes au suivant, le signe de la dérivée de la tension présente à ses bornes immédiatement avant sa fermeture, et en ce que la durée d'un train d'ondes, au cours duquel la fermeture des interrupteurs est confirmée à un instant proche du passage à zéro de la tension à leurs bornes, est égale à une durée minimale définie par la conduction pendant environ 570 degrés de chaque interrupteur, augmentée d'un nombre entier ou nul de périodes du réseau d'alimentation.

Ce circuit comprend un transformateur triphasé T3 dont le primaire comporte trois enroulements montés en triangle entre les bornes P1, P2, P3. Le secondaire en étoile à trois bornes S1, S2, S3 débite sur trois résistances R14, R15, R16 représentant une charge active.

Les bornes du primaire P1, P2, P3 sont reliées aux conducteurs d'un réseau triphasé V1, V2, V3, P3 étant en liaison directe avec V3, tandis que P1 et P2 sont reliées à V1 et V2 à travers des interrupteurs I1 et I2 respectivement. Le réseau V1, V2, V3 est doté d'un neutre artificiel mis localement à la terre, constitué de trois résistances R1, R2 et R3, branchées respectivement entre V1, V2, V3 et la terre.

Les interrupteurs I1 et I2 sont constitués chacun d'une paire de thyristors montés tête-bêche SCR1,SCR1′, SCR2, SCR2′ respectivement. Les gâchettes des thyristors sont attaquées, avec une phase appropriée, par la sortie de transformateurs d'impulsion T1 pour I1 et T2 pour I2. Ces transformateurs d'impulsion sont commandés par des monostables U16 et U19, en sortie d'un circuit logique de commande qui comprend :
- Deux paires de comparateurs U1 U2 ; U3, U4.
- Deux jeux de portes NI U6, U8 ; U7, U9.
- Un ensemble de deux portes ET U14, U15 et d'une porte OU U18.
- Un compteur U17 et une porte OU associée U12.
- Un ensemble d'un inverseur U5, une bascule U10, un bistable U11 et une porte ET U13.

Les connexions entre les divers éléments du circuit logique de commande seront précisées lors de la description du fonctionnement. Lorsqu'un thyristor de chaque interrupteur I1 et I2 est conducteur (I1 et I2 fermés), la pleine tension est appliquée au circuit d'utilisation à travers T3. Lorsque tous les thyristors sont bloqués (I1, I2 ouverts), la tension aux bornes d'utilisation est nulle.

La présence de tension aux bornes du circuit d'utilisation est commandée par un signal binaire extérieur de "commande de tension", qui est appliqué à une entrée des portes logiques ET U14 et U15. La valeur moyenne de ce signal binaire représente approximativement le taux de travail du système à ondes entières.

En régime établi, c'est-à-dire notamment après que le transformateur ait atteint son état magnétique stationnaire, le processus de commande se déroule de la façon suivante :

Lorsque le signal de "commande de tension" passe de l'état logique bas à l'état haut et commande de ce fait un début de train d'ondes, la porte ET U13 ne passe à l'état haut et n'autorise la commande effective de I2 que lorsqu'il y a coïncidence entre le signe de la tension aux bornes de I2, lu en sortie Q de la bascule U10 et l'inverse de la tension présente aux bornes de I2, immédiatement avant le début du train d'ondes précédent, mémorisé en Q du bistable U11.

En effet les comparateurs U1 et U2 connectés aux bornes de I2 à travers les ponts diviseurs des résistances R6-R11 et R7-R10, délivrent à leur sortie des signaux logiques, en général opposés, images du signe de la tension aux bornes de I2.

Dans une plage étroite autour de la tension nulle, ils délivrent un même niveau logique bas, grâce à la tension de polarisation de faible valeur -P, appliquée à leur entrée positive à travers la résistance R8 et référencée au neutre des tensions triphasées V1, V2, V3, défini par les trois résistances R1, R2 et R3.

Au premier passage par zéro de la tension aux bornes de I2 qui suit la montée de la sortie de U13 à l'état haut, les deux niveaux logiques bas appliqués à l'entrée de la porte NI U6, créent un état logique haut à sa sortie. Ce signal est appliqué aux entrées des portes U15 et U8. Les quatre entrées de la porte ET U15 sont à l'état haut, la quatrième étant reliée à la sortie C6 du compteur U17 qui est à l'état haut depuis la fin du précédent train d'ondes. U15 transmet un état haut à la porte OU U18 qui provoque une remise à zéro du compteur U17 et le passage à l'état bas de sa sortie C6. Ce signal, transmis par l'inverseur U5, crée un front positif à l'entrée d'horloge de la bascule U11 qui mémorise l'inverse du signe immédiatement antérieur de la tension aux bornes de I2, transmis par la sortie Q̅ de la bascule U10, pour l'utiliser au début du prochain train d'ondes. D'autre part, dès que la tension aux bornes de I2 passe au-dessus d'un seuil défini par -P et qui est supposé négligeable vis-à-vis de l'amplitude des tensions V1, V2, V3 d'alimentation, celui des comparateurs U1 ou U2 dont la polarité convient, présente un état haut à sa sortie, provoquant un état bas en sortie de U6. La porte NI U8, ayant un état bas sur chaque entrée, transmet un état haut à l'entrée du monostable U16 qui commande, à travers le transformateur d'impulsion T2, la conduction de celui des thyristors SCR2 ou SCR2′ dont la polarité convient et provoque la fermeture de I2. Le compteur U17 avance d'un pas par l'action de l'impulsion générée par U16 et transmise par la porte OU U12. Au passage par zéro de la tension aux bornes de l'interrupteur I1 qui suit immédiatement celui de I2, on observe, à l'aide d'une chaîne, constituée des ponts diviseurs à résistances R4, R13 et R5, R12, de la résistance R9, des comparateurs U3, U4, de la porte NI U7, de la porte NI U9, du monostable U19 et du transformateur d'impulsion T1, un fonctionnement homologue de celui décrit ci-dessus pour la fermeture de I2, conduisant à la fermeture de I1 et à l'avance d'un deuxième pas du compteur U17. Au passage par zéro du courant dans I2 puis dans I1, respectivement 210° et 180° électriques environ après leur fermeture, I2 puis I1, se trouvent ouverts un temps très court nécessaire à ce que la tension à leur borne atteigne le seuil défini par -P et provoque ainsi un état logique haut en sortie d'une des portes NI U6 ou U7 et, comme précédemment, une impulsion de commande vers les thyristors de l'interrupteur I2 ou I1 qui est à nouveau fermé, après une interruption dont la durée est supposée négligeable, au même titre que l'amplitude du seuil défini par -P. Chaque impulsion de commande de I2 ou I1, fait progresser le compteur U17 d'un pas. Lorsque I2 et I1 ont reçu chacun deux impulsions de commande, la sortie C4 du compteur U17 passe à l'état haut. Si le signal de "tension de commande" est retombé à l'état bas, le train d'ondes se termine après la sixième impulsion de commande, lorsque la sortie C6 du compteur U17 passe à l'état haut et bloque les portes NI U8 et U9, interdisant la transmission de tout nouvel ordre de commande vers I2 ou I1.

Le train d'ondes ainsi obtenu a une durée égale à la durée minimale, correspondant à la conduction pendant 570° électriques de I1 et I2. Le processus de commande recommence après le retour à l'état haut du signal de "commande de tension", de la même façon que précédemment. Si au contraire, le signal de "tension de commander est encore à l'état haut lorsque la sortie C4 du compteur U17 passe à l'état haut, la sortie de la porte ET U14 passe à l'état haut et provoque, à travers la porte OU U18, une remise à zéro du compteur U17.

Cette opération a pour effet de rallonger de quatre impulsions de commande, soit une période du réseau d'alimentation, la durée du train d'ondes. Cet accroissement de durée par période entière du secteur, se répète jusqu'à ce que le signal de "commande de tension" soit à l'état bas lorsque la sortie C4 de U17 se trouve à l'état haut. Le train d'ondes se termine, après deux impulsions de commande supplémentaires, lorsque la sortie C6 du compteur passe à l'état haut, de façon identique au cas d'un train d'ondes de durée minimale, décrit plus haut. Le début du train d'ondes suivant est déterminé par le retour à l'état haut du signal de commande, suivant un processus déjà décrit.

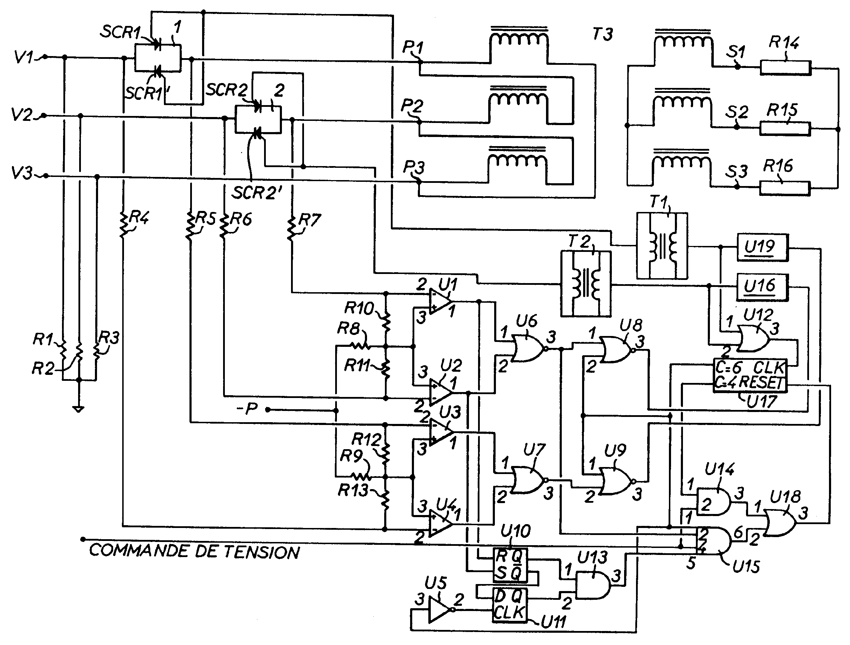

## Revendications

1. Procédé de commande d'interrupteurs à courant alternatif, pour l'alimentation en ondes entières d'un circuit triphasé, à l'aide de deux interrupteurs (I1, I2) placés chacun en série dans une phase d'alimentation (V1, V2), la troisième phase (V3) étant reliée directement au circuit d'utilisation, le début de chaque train d'ondes étant obtenu par fermeture, dans un ordre constant, d'un premier interrupteur (I1 ou I2), puis du second interrupteur (I2 ou I1) environ 90° après le premier, caractérisé en ce que les interrupteurs sont fermés, chacun, à un instant proche du passage à zéro de la tension à ses bornes et, pour le premier (I1 ou I2), en alternant, d'un train d'ondes au suivant, le signe de la dérivée de la tension présente à ses bornes immédiatement avant sa fermeture, et en ce que la durée d'un train d'ondes, au cours duquel la fermeture des interrupteurs est confirmée à un instant proche du passage à zéro de la tension à leurs bornes, est égale à une durée minimale définie par la conduction pendant environ 570 degrés de chaque interrupteur, augmentée d'un nombre entier ou nul de périodes du réseau d'alimentation.

2. Procédé suivant la revendication 1, dans lequel l'ordre constant de fermeture des interrupteurs (I1, I2) en début de train d'ondes, est l'ordre inverse de l'ordre de succession des phases auxquelles ils sont respectivement reliés.

3. Procédé suivant la revendication 2, dans lequel un transformateur triphasé (T3) qui transmet les trains d'ondes des interrupteurs au circuit d'utilisation, a ses enroulements primaires connectés suivant le montage triangle.

4. Procédé suivant la revendication 3, dans lequel l'enroulement primaire du transformateur qui est alimenté par les deux phases auxquelles sont respectivement reliés les interrupteurs (I1 et I2), est situé sur la jambe centrale du circuit magnétique du transformateur (T3).

## Patentansprüche

1. Schaltsteuerverfahren für Wechselströme zur Vollwellenleistungsversorgung einer dreiphasigen Schaltung, wobei zwei Schaltelemente (I1, I2) seriell in jeweils eine Versorgungsphase (V1, V2) eingeschaltet sind, während die dritte Phase (V3) direkt mit der Versorgung verbunden ist, und wobei der Beginn eines jeden Wellenzuges in gleichmäßiger Folge durch das Schließen eines ersten Schaltelements (I1 oder I2), gefolgt vom Schließen eines zweiten Schaltelements (I2 oder I1) um etwa 90° versetzt gegenüber dem ersten, festgelegt wird, dadurch gekennzeichnet, daß jedes der beiden Schaltelemente zu einem Zeitpunkt in der Nähe des Nulldurchgangs der Klemmenspannung geschlossen wird, und daß beim jeweils ersten (I1 oder I2) ein Wellenzug entsprechend dem Vorzeichen der Ableitung der unmittelbar vor dem Schließen an den Klemmen anliegenden Spannung auftritt, und dadurch, daß die Dauer eines Wellenzuges, in dessen Verlauf ein Schließen der Schaltelemente nur innerhalb einer kurzen Zeitspanne in der Nähe des Nulldurchgangs der Klemmenspannung zugelassen wird, gleich einer minimalen Dauer ist, die durch das Durchschalten eines jeden Schaltelements auf etwa 570° plus einer ganzzahligen Anzahl (oder null) Netzperioden festgelegt ist.

2. Verfahren nach Anspruch 1, wobei das gleichförmige Schließen der Schaltelemente (I1, I2) zu Beginn des Wellenzuges invers zur Folge der Phasen, in die diese jeweils eingeschaltet sind, abläuft.

3. Verfahren nach Anspruch 2, wobei der Dreiphasentransformator (T3), der die Wellenzüge von den Schaltelementen an den Lastausgang überträgt, mit den Primärwicklungen in Dreieckschaltung verdrahtet ist.

4. Verfahren nach Anspruch 3, wobei die Primärwicklung des Transformators, der über die beiden Phasen, in die die Schaltelemente (I1 und I2) eingeschaltet sind, versorgt wird, auf dem mittleren Polschenkel des Eisenkreises des Transformators (T3) angeordnet ist.

## Claims

1. Method for controlling alternating-current switches, for the full-wave supply of a three-phase circuit, using two switches (I1, I2) each placed in series in a supply phase (V1, V2), the third phase (V3) being connected directly to the load circuit, the start of each wave train being obtained by closing, in constant order, a first switch (I1 or I2), and then the second switch (I2 or I1) approximately 90° after the first, characterised in that each of the switches is closed at an instant near to the zero crossing of the voltage at its terminals and, for the first (I1 or I2), alternating the sign of the voltage derivative present at its terminals immediately before its closure, from one wave train to the next, and in that the duration of a wave train, during which the closure of the switches is confirmed at an instant near to the zero crossing of the voltage at their terminals, is equal to a minimum duration defined by the conduction of each switch for approximately 570 degrees, increased by zero or some whole number of mains supply periods.

2. Method according to Claim 1, in which the constant order of closure of the switches (I1, I2) at the start of the wave train is the reverse of the order of succession of the phases to which they are respectively connected.

3. Method according to Claim 2, in which a three-phase transformer (T3), which transmits the wave trains from the switches to the load circuit, has its primary windings in a delta connection.

4. Method according to Claim 3, in which the primary winding of the transformer which is supplied by the two phases to which the switches (I1 and I2) are respectively connected, is situated on the central leg of the magnetic circuit of the transformer (T3).
